# EUROPÄISCHE PATENTANMELDUNG

(11) **EP 2 330 361 A2**
(43) Veröffentlichungstag der Anmeldung: **08.06.2011**
(21) Anmeldenummer: 10190159.3
(22) Anmeldetag: 05.11.2010
(51) Int. Cl.: F24H 9/06

(54) **Warmwassergerät mit Befestigungsvorrichtung**

(30) Priorität: 24.11.2009 DE 102009054361
(71) Anmelder: BSH Bosch und Siemens Hausgeräte GmbH, 81739 München (DE)
(72) Erfinder: Gruber, Michael, 83362 Surberg (DE); Oberfuchshuber, Birgit, 84518 Garching a.d. Alz (DE)

(57) **Zusammenfassung**

Die vorliegende Erfindung betrifft ein Warmwassergerät, insbesondere Warmwasserspeicher, mit einer Befestigungsvorrichtung zum Befestigen des Warmwassergeräts an eine Wand und zumindest einem Hauptmodul, welches zum Zwecke einer Montage auf die Befestigungsvorrichtung einen Befestigungsbereich aufweist, wobei die Befestigungsvorrichtung mindestens ein mit dem Befestigungsbereich zusammenwirkendes Mittel zum Zentrieren des Hauptmoduls aufweist.

## Beschreibung

### Hintergrund der Erfindung

Die vorliegende Erfindung betrifft ein Warmwassergerät, insbesondere Warmwasserspeicher, mit einer Befestigungsvorrichtung zum Befestigen des Warmwassergeräts an eine Wand und zumindest einem Hauptmodul, welches zum Zwecke einer Montage auf die Befestigungsvorrichtung einen Befestigungsbereich aufweist.

### Stand der Technik

Warmwasserspeicher und insbesondere Kleinwarmwasserspeicher werden oft an schwer zugänglichen Stellen eingesetzt. So werden diese beispielsweise unter Spültischen oder Waschbecken montiert. Die Speicher werden mit geeigneten Wandmontagevorrichtungen geliefert, auf welchen das Einhängen des Speichers erfolgt. Dieses Einhängen erfolgt üblicherweise blind, da der Installateur keine Möglichkeit hat, um den Aufhängebereich einzusehen. Dieser Bereich wird durch den relativ sperrigen Körper des Warmwasserspeichers verdeckt, und der Installateur muss mit diesem sperrigen und relativ schweren Bauteil so lange hantieren, bis der Speicher in seine Montageendlage gebracht werden konnte. Ebenfalls bekannt ist eine Montageleiste für Boiler bereitzustellen, welche als Aufhängung der Boiler dienen kann. Auch diese Montageleiste weist Nachteile auf, da der Monteur präzise ohne Sichtkontakt den verhältnismäßig schweren Boiler an die Montageleiste anbringen sollte, welches beim relativ hohen Gewicht des Wassertanks schwierig zu bewältigen ist. Die Verwendung einer solchen Montageleiste hat sich als unflexibel und schwer handhabbar herausgestellt.

### Der Erfindung zugrundeliegende Aufgabe

Der Erfindung liegt die Aufgabe zugrunde, ein Warmwassergerät bereitzustellen, welches leicht an eine Wand anmontiert werden kann.

### Erfindungsgemäße Lösung

Die Lösung der gestellten Aufgabe gelingt durch ein Warmwassergerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Das erfindungsgemäße Warmwassergerät, insbesondere Warmwasserspeicher, umfasst eine Befestigungsvorrichtung zum Befestigen des Warmwassergeräts an eine Wand und zumindest ein Hauptmodul, welches zum Zwecke einer Montage auf die Befestigungsvorrichtung einen Befestigungsbereich aufweist. Die Befestigungsvorrichtung mindestens ein mit dem Befestigungsbereich zusammenwirkendes Mittel zum Zentrieren des Hauptmoduls aufweist. Das Mittel zum Zentrieren wirkt im Befestigungsbereich des Hauptmoduls, so dass dieses selbständig in seine Montageendlage heranführbar ist bzw. geführt wird. Folglich muss ein Monteur keine hohen Kräfte aufwenden, um das Hauptmodul des Warmwassergeräts an eine Wand zu fixieren, da das Hauptmodul durch das mindestens eine Mittel zur Zentrierung die Arretierungslage selbständig nach Art einer Selbstjustierung findet. Das Hauptmodul kann die meisten Komponenten eines Warmwassergeräts umfassen, wie Wassertank, Steuerelektronik etc, jedoch ist es denkbar, dass das Hauptmodul nur als Rückwand des Geräts ausgeführt ist, auf welcher ferner die Funktionsbauteile befestigt werden sollten. Die vorliegende Erfindung stellt eine einfache Anbringung eines Warmwassergeräts an eine Wand, welche schwer zugänglich sein kann, bereit.

### Bevorzugte Ausgestaltung der Erfindung

In einer bevorzugten Ausführungsform der Erfindung wirkt das mindestens eine Mittel zum Zentrieren mit dem Befestigungsbereich im Bereich einer Rückwand des Hauptmoduls (20) zusammen. Durch diese Anordnung des Befestigungsbereichs in der Rückwand kann eine kompakte Bauweise der Befestigungsvorrichtung gewährleistet werden. So können auch die Seitenwände der Warmwassergeräts frei von Befestigungsmitteln gehalten werden, so dass keine Verletzungsgefahr für einen Benutzer entstehen kann und ferner das Äußerliche nicht negativ beeinflusst werden kann.

Erfindungsgemäß bevorzugt weist die Befestigungsvorrichtung mindestens eine im Wesentlichen flache Montageebene auf, aus welcher das mindestens eine Mittel zum Zentrieren herausragt. Durch die im Wesentlichen flach ausgebildete Montageebene kann die Befestigungsvorrichtung sicher an eine Wand fixiert werden, so dass ein flächiger Kraftschluss mit der Wand entstehen kann. Aus der Montageebene ragt das mindestens eine Mittel zum Zentrieren heraus, so dass während der Montage die Ausrichtung des Hauptmoduls gegenüber der Befestigungsvorrichtung leicht und ohne Kraftaufwand bereitgestellt werden kann.

In vorteilhafter Weise kann das mindestens eine Mittel zum Zentrieren mindestens eine Zentrierfläche aufweisen, welche mit dem Befestigungsbereich zusammenwirkt, um das Hauptmodul in bzw. an seine Montageendlage heranzuführen. Die mindestens eine Zentrierfläche kann vorzugsweise als Gleitfläche wirken, damit das Hauptmodul leicht in die Montageendlage ohne Kraftaufwand und ohne Blickkontakt auf den Befestigungsbereich in der Rückwand des Hauptmoduls herangeführt werden kann.

Bevorzugt ragt das mindestens eine Mittel zum Zentrieren nach Art eines Pyramidenstumpfes mit einer rechteckigen Grundfläche, nach Art eines Kegelstumpfes oder nach Art einer Halbkugel aus der Montageebene heraus. Diese Formen bzw. Ausgestaltungen des Mittels zum Zentrieren können eine besonders vorteilhafte Arretierung bzw. Führung des Hauptmoduls in die Montageendlage auf die Befestigungsvorrichtung bereitstellen, jedoch auch andere Ausgestaltungen sind realisierbar.

Zweckmäßigerweise weist das Mittel zum Zentrieren mindestens ein Wandbefestigungsmittel für die Befestigungsvorrichtung auf. Durch die Anordnung des Wandbefestigungsmittels innerhalb des Mittels zum Zentrieren kann eine einfache Bauweise und eine sichere Fixierung der Befestigungsvorrichtung beispielsweise an eine Hauswand bereitgestellt werden.

Es ist bevorzugt, dass das Mittel zum Zentrieren ein Tragebereich aufweist, welcher in der Montageendlage das Hauptmodul abstützt bzw. trägt. Der Tragebereich nimmt das Gewicht des Hauptmoduls bzw. des Warmwassergeräts auf und sichert dieses an eine Hauswand mittels der Befestigungsvorrichtung, d.h das Gewicht wird mittels der Befestigungsvorrichtung beispielsweise an eine Hauswand weitergegeben. Das Zentriermittel erlaubt das Zentrieren des Hauptmoduls auf den Tragebereich, in welchem das Modul einrasten kann.

Bevorzugt weist das Mittel zum Zentrieren im Tragebereich mindestens eine Kerbe auf. Die Kerbe sichert das Warmwassergerät in seiner Montageendlage gegen laterale Bewegungen, so dass das Gerät sicher in dieser Lage verankert bzw. eingehängt bleiben kann.

Der Tragebereich weist mindestens ein Verrastungsmittel auf, welches mit der Rückwand des Hauptmoduls zusammenwirkt. Das Verrastungsmittel, welches mit einem entsprechenden Gegenrastmittel auf der Rückwand zusammenwirken kann, sichert das Warmwassergerät bzw. das Hauptmodul in seiner Montageendlage an der Wand. Das Verrastungsmittel kann auch beispielsweise eine akustische Rückmeldung generieren, wenn das Hauptmodul mittels des Mittels zum Zentrieren seine Montageendlage erreich hat. Folglich erkennt der Installateur, dass die Montage erfolgreich war.

Bevorzugt ist die Befestigungsvorrichtung aus Kunststoff oder aus einer Metalllegierung herstellbar. Diese Materialien sind stabil und leicht bearbeitbar. Jedoch auch andere Materialien sind einsetzbar, welche die notwendige Stabilität aufweisen.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 eine Befestigungsvorrichtung gemäß der vorliegenden Erfindung; und
Fig. 2 die Rückwand eines Warmwassergeräts mit einer Befestigungsvorrichtung gemäß der vorliegenden Erfindung.

### Ausführliche Beschreibung anhand eines Ausführungsbeispiels

Bei der nachfolgenden Beschreibung zweier bevorzugter Ausführungsformen der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

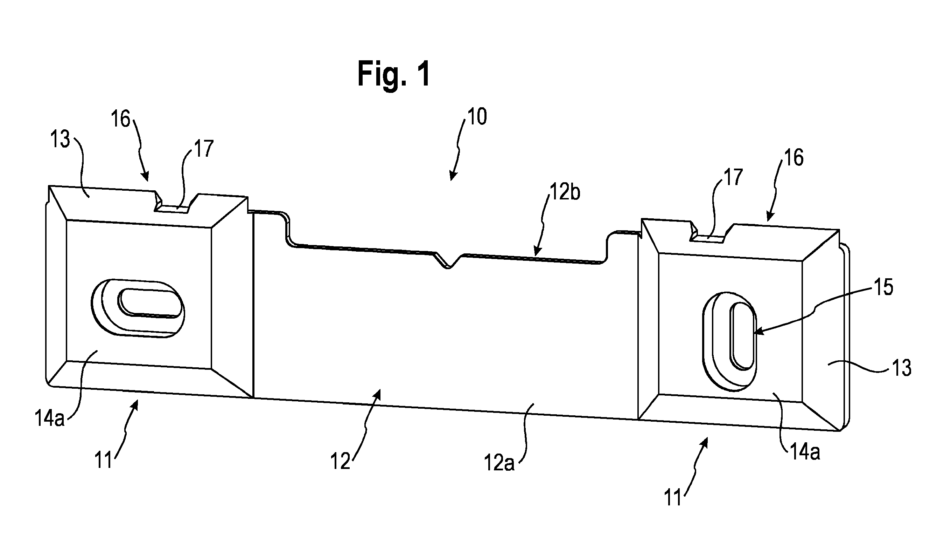

Fig. 1 zeigt eine Befestigungsvorrichtung gemäß der vorliegenden Erfindung. Die Befestigungsvorrichtung 10 kann zur Befestigung eines Warmwasserspeichers bzw. Warmwassergeräts 1 an einer Wand verwendet werden. Die Wand kann eine Hauswand sein, jedoch ist es vorstellbar, dass der Warmwasserspeicher als Einbaugerät beispielsweise in einer Küchenzeile eingebaut werden kann. Insbesondere kann die Befestigungsvorrichtung bei der Montage kleiner Warmwasserspeicher, die beispielsweise unter Spültischen oder unter Waschbecken verwendet werden. Die Befestigungsvorrichtung 10 wird zuerst an eine Wand bzw. an eine gewünschte Stelle angebracht und anschließend wird das Warmwassergerät 1 bzw. sein Hauptmodul 20 auf die Befestigungsvorrichtung aufgehängt. Das Aufhängen bzw. Anbringen des Hauptmoduls 20 kann blind geschehen, da die Befestigungsvorrichtung das Arretieren bzw. Zentrieren des Hauptmoduls 20 bereitstellt bzw. übernimmt. Dies ist von besonderem Vorteil, da der Monteur das relativ hohe Gewicht des Hauptmoduls 20 in unzugänglichen Stellen nicht unnötig lange bewegen bzw. zentrieren muss.

Die Befestigungsvorrichtung weist ein Mittel zum Zentrieren 11 auf, welches in einem Befestigungsbereich 21 des Hauptmoduls 20 auf dessen Rückwand 22 zusammenwirkt. Nachdem die Befestigungsvorrichtung 10 an eine Wand mit Hilfe von Wandbefestigungsmitteln 15 fixiert wurde, kann ein Monteur das Hauptmodul 20 einfach auf die Befestigungsvorrichtung heranführen. Die Mittel zum Zentrieren 11 bzw. Ausrichten bzw. Arretieren bewirken, dass das Hauptmodul 20 des Warmwassergeräts 1 automatisch in seine Montageendlage auf die Befestigungsvorrichtung aufgehängt werden kann. Das Mittel 11 weist gemäß einer möglichen Ausführungsform der Erfindung die Form eines Pyramidenstumpfes auf, welcher aus einer Montageebene 12 der Befestigungsvorrichtung 10 herausragt. Die Befestigungsvorrichtung 10 kann sich länglich erstrecken und weist insbesondere eine ebene Form auf aus welcher die Mittel zum Zentrieren 11 herausragen. Die relativ flache Montageebene 12 weist zwei Seiten auf: eine erste Seite 12a, welche in der Montageendlage des Warmwassergeräts 1 der Rückwand 22 des Hauptmoduls 20 zugekehrt ist und eine zweite Seite 12b, welche auf der Wand anliegt, auf welche das Gerät 1 befestigt werden sollte. Durch diese vollflächige Ausbildung der Montageebene 12 kann das Hauptmodul 20 sicher fixiert werden, und ferner bewirkt die Ebene 12, dass die beiden Pyramidenstumpfe in einem konstanten bzw. festen Abstand zueinander starr verbunden sind, um ein Verdrehen oder Verschieben der Pyramidenstumpfe 11 zu verhindern. Wiederum bewirkt die flach ausgebildete zweite Seite 12b, dass die Befestigungsvorrichtung 10 sicher an der Wand, beispielsweise Hauswand, fixiert werden kann. Durch den flächigen Kontakt zwischen der zweiten Seite 12b und der Hauswand, kann somit eine stabile Befestigung für das relativ schwere Warmwassergerät gewährleistet werden.

Gemäß einer Ausführungsform der Befestigungsvorrichtung 10 weist das Mittel zum Zentrieren 11 des Hauptmoduls 20 eine rechteckige Grundfläche 14 auf, welche bevorzugt im Wesentlichen in der Montageebene 12 angeordnet ist. Aus dieser Grundfläche 12 ragen jeweils zwei Pyramidenstümpfe 11 heraus, welche das Mittel zum Zentrieren des Hauptmoduls 20 bilden. Es ist jedoch vorstellbar, dass das Mittel zum Zentrieren 11 des Hauptmoduls 20 die Form eines Kegelstumpfes oder einer Halbkugel besitzt. Die Deckfläche 14a der Pyramidenstumpfe 11 verläuft parallel zur Grundfläche 14 und dient im Wesentlichen dazu mit der Rückwand 22 des Hauptmoduls im Befestigungsbereich 21 zusammenzuwirken. Es ist jedoch vorstellbar, dass kein direkter Kontakt zwischen Rückwand 22 und Deckfläche 14a entsteht. Im Falle eines Kontaktes kann jedoch die Deckfläche 14a das Gewicht des Warmwassergeräts 1 aufnehmen und mittels der Befestigungsvorrichtung 10 kann eine sichere Montageendlage an einer Wand gewährleistet werden.

Gemäß einer Ausführungsform kommt es zu keinem direkten Kontakt zwischen der Deckfläche 14a und der Rückwand 22. Dadurch, dass die Schraubenverbindung bzw. das Wandbefestigungsmittel 15 zwischen Haltebügel bzw. Befestigungsvorrichtung 10 und der Wand in der Fläche 14a angeordnet ist, dient das Material, das in diesem Bereich der Deckfläche 14a ist, zur Kraftübertragung zwischen der Wand und dem gesamten Haltebügel 10, jedoch nicht unmittelbar zwischen Deckfläche 14a und der Rückwand 22. Im eingehängten Zustand wird das Gewicht des Speichers 1 überwiegend durch den Tragebereich 16 aufgenommen. Die Verrastung 18 stellt sicher, dass das eingehängte bzw. montierte Gerät 1 nicht von der Wand wegkippt.

Das Mittel zum Zentrieren 11 als Pyramidenstumpf beispielsweise weist mindestens eine Zentrierfläche 13 auf, wobei in diesem nichteinschränkenden Ausführungsbeispiel jeweils vier Zentrierflächen 13 pro Pyramidenstumpf 11 ausgebildet sind. Diese Zentrierflächen wirken im Befestigungsbereich 21 mit dem Hauptmodul 20 zusammen und dieses wird bei der Montage in seine Montageendlage herangeführt bzw. zentriert. Die Zentrierflächen 13 wirken ähnlich Gleitflächen, so dass das Hauptmodul ohne Blickkontakt in seine entsprechende Endlage bzw. Montageendlage ausgerichtet bzw. arretiert werden kann. Die Befestigungsvorrichtung 10 weist einen Tragebereich 16 auf, auf welchen sich in der Montageendlage das Gewicht des Warmwassergerät 1 abstützen kann, um eine sichere Fixierung an die Wand bereitstellen zu können. Ferner kann der Tragebereich 16 ein Verrastungsmittel 18 aufweisen, welches mit einem entsprechenden Mittel, beispielsweise Laschen, auf der Rückwand 22 des Hauptmoduls 20 zusammenwirken kann, damit das Hauptmodul in seiner Montageendlage auf der Befestigungsvorrichtung 10 fixiert werden kann.

Weiter weist der Tragebereich 16 des jeweiligen Pyramidenstumpfes eine Kerbe 17 auf, welche das Hauptmodul 20 und somit das Warmwassergerät 1 gegenüber seitlichen Bewegungen auf der Befestigungsvorrichtung 10 sichern kann. Dazu kann die Rückwand 22 ein entsprechendes Mittel aufweisen, welches in die Kerbe 17 eingreift.

Gemäß einem Ausführungsbeispiel weist die Befestigungsvorrichtung 10 mindestens ein Wandbefestigungsmittel 15 auf, welches bevorzugt im Bereich des jeweiligen Pyramidenstumpfes 11 angeordnet ist. Das Wandbefestigungsmittel 15 kann als Bohrung in der Deckfläche 14a des Pyramidenstumpfes 11 ausgebildet werden, so dass mittels einer geeigneten Verschraubung die Befestigungsvorrichtung 10 an die Wand fixiert werden kann. Auch andere Lagen für das Wandbefestigungsmittel 15 sind vorstellbar, so können diese beispielsweise auf der Montageebene 12 angeordnet sein, welches den vollflächigen Kontakt zwischen Befestigungsvorrichtung 10 und Wand gewährleistet.

Die Befestigungsvorrichtung 10 kann aus einer Metalllegierung oder aus Kunststoff hergestellt werden, wobei das gewählte Material geeignet sein soll, um das Gewicht eines vollen Warmwasserspeichers 1 tragen zu können.

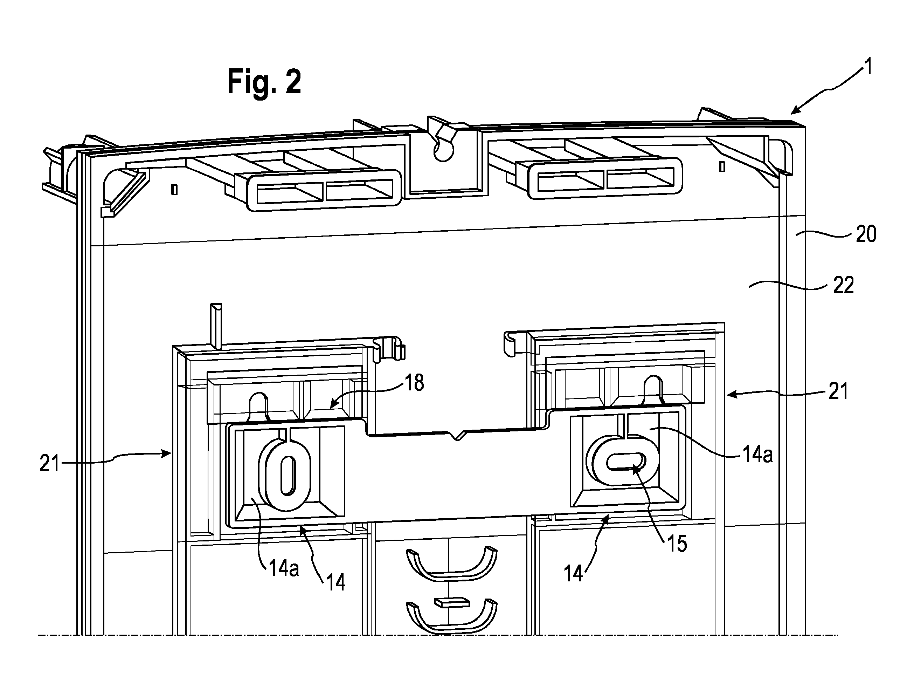

Fig. 2 zeigt die Rückseite eines Warmwasserspeichers in seiner Montageendlage, wobei die Hauswand aus Gründen der Übersichtlichkeit nicht dargestellt worden ist. Die Befestigungsvorrichtung 10 wirkt mit der Rückwand 22 des Hauptmoduls 20 in einem entsprechenden Befestigungsbereich 21 zusammen. Die Befestigungsvorrichtung 10 weist in diesem Ausführungsbeispiel zwei Tragebereiche 16 auf, welche das Gewicht des Warmwasserspeichers 1 aufnehmen können. Die Rückwand 22 weist zwei rechteckige Aussparungen 21 auf in welche die Pyramidenstümpfe 11 eingreifen können, so dass das Hauptmodul 20 praktisch selbstständig in sine entsprechende Montageendlage auf der Befestigungsvorrichtung 10 herangeführt werden kann. Die Pyramidenstümpfe 11 mit deren Deckfläche 14a tauchen in die jeweilige rechteckige Aussparung des Befestigungsbereichs 10 in der Rückwand hinein, so dass durch die schrägen Zentrierflächen 13 der jeweiligen Pyramidenstümpfe eine Arretierung bzw. Zentrierung in die Montageendlage an der Befestigungsvorrichtung 10 erfolgt. Das Hauptmodul 20 kann folglich blind an schwerzugänglichen Stellen montiert werden.

Mittels der erfindungsgemäßen Vorrichtung kann gewährleistet werden, dass das Hauptmodul 20 an eine Wand einfach montiert werden kann. Das Mittel zum Zentrieren 11 der Befestigungsvorrichtung 10 stellte die Arretierung des Hauptmoduls 20 gegenüber der Befestigungsvorrichtung bereit, so dass dieses automatisch ohne hohen Kraftaufwand in seine entsprechende Montageendlage gleiten kann. Das Hauptmodul kann neben anderen Bauteilen im Wesentlichen den relativ schweren Wassertank eines Warmwasserspeichers umfassen, welches folglich einen hohen Kraftaufwand durch einen Installateur beim bewegen des Hauptmoduls erfordern kann. Die Erfindung kann jedoch auch für Hauptmodule eingesetzt werden, welche bei der Montage noch nicht mit dem Wassertank bestückt worden sind.

### Bezugszeichenliste

- 1: Warmwassergerät insbesondere Kleinwarmwasserspeicher
- 10: Befestigungsvorrichtung
- 11: Mittel zum Zentrieren bzw. Arretierungsmittel
- 12: Montageebene
- 12a: erste Seite
- 12b: zweite Seite
- 13: Zentrierfläche bzw. Arretierungsfläche
- 14: Grundfläche des Pyramidenstumpfes
- 14a: Deckfläche
- 15: Wandbefestigungsmittel
- 16: Tragebereich
- 17: Kerbe
- 18: Verrastungsmittel für die Rückwand
- 20: Hauptmodul
- 21: Befestigungsbereich
- 22: Rückwand

## Patentansprüche

1. Warmwassergerät (1), insbesondere Warmwasserspeicher, mit einer Befestigungsvorrichtung (10) zum Befestigen des Warmwassergeräts (1) an eine Wand und zumindest einem Hauptmodul (20), welches zum Zwecke einer Montage auf die Befestigungsvorrichtung (10) einen Befestigungsbereich (21) aufweist, **dadurch gekennzeichnet, dass** die Befestigungsvorrichtung (10) mindestens ein mit dem Befestigungsbereich (21) zusammenwirkendes Mittel zum Zentrieren (11) des Hauptmoduls (20) aufweist.

2. Warmwassergerät (1) nach Anspruch 1, **dadurch gekennzeichnet, dass** das mindestens eine Mittel zum Zentrieren (11) mit dem Befestigungsbereich (21) im Bereich einer Rückwand (22) des Hauptmoduls (20) zusammenwirkt.

3. Warmwassergerät (1) nach Anspruch 1 oder 2, **dadurch gekennzeichnet, dass** die Befestigungsvorrichtung (10) mindestens eine im Wesentlichen flache Montageebene (12) aufweist, aus welcher das mindestens eine Mittel zum Zentrieren (11) herausragt.

4. Warmwassergerät (1) nach einem der vorherigen Ansprüche, **dadurch gekennzeichnet, dass** das mindestens eine Mittel zum Zentrieren (10) mindestens eine Zentrierfläche (13) aufweist, welche mit dem Befestigungsbereich (21) zusammenwirkt, um das Hauptmodul (20) in seine Montageendlage heranzuführen.

5. Warmwassergerät (1) nach einem der vorherigen Ansprüche, **dadurch gekennzeichnet, dass** das mindestens eine Mittel zum Zentrieren (11) nach Art eines Pyramidenstumpfes mit einer rechteckigen Grundfläche (14), nach Art eines Kegelstumpfes oder nach Art einer Halbkugel aus der Montageebene (12) herausragt.

6. Warmwassergerät (1) nach einem der vorherigen Ansprüche, **dadurch gekennzeichnet, dass** das Mittel zum Zentrieren (11) mindestens ein Wandbefestigungsmittel (15) für die Befestigungsvorrichtung (10) aufweist.

7. Warmwassergerät (1) nach einem der vorherigen Ansprüche, **dadurch gekennzeichnet, dass** das Mittel zum Zentrieren (11) einen Tragebereich (16) aufweist, welcher in der Montageendlage das Hauptmoduls (20) abstützt bzw. trägt.

8. Warmwassergerät (1) nach einem der vorherigen Ansprüche, **dadurch gekennzeichnet, dass** das Mittel zum Zentrieren (11) im Tragebereich (16) mindestens eine Kerbe (17) aufweist.

9. Warmwassergerät (1) nach einem der vorherigen Ansprüche, **dadurch gekennzeichnet, dass** das Tragebereich (16) mindestens ein Verrastungsmittel (18) welches mit der Rückwand (22) des Hauptmoduls (20) zusammenwirkt.

10. Warmwassergerät (1) nach einem der vorherigen Ansprüche, **dadurch gekennzeichnet, dass** die Befestigungsvorrichtung (10) aus Kunststoff oder aus einer Metalllegierung herstellbar ist.
